# EUROPEAN PATENT APPLICATION

(11) **EP 4 312 361 A1**
(43) Date of publication of application: **31.01.2024**
(21) Application number: 23181128.2
(22) Date of filing: 23.06.2023
(51) Int. Cl.: H02S 20/22, H02S 20/26

(54) **WALL SANDWICH PANEL WITH PHOTOVOLTAIC PANEL AND A SET OF SANDWICH PANELS**

(30) Priority: 25.07.2022 PL 44183122
(71) Applicant: Balex Metal sp. z o. o., 84-239 Bolszewo (PL)
(72) Inventor: Szmuka a, Romeo, Rumia (PL)
(74) Representative: Tomkins & Co

(57) **Abstract**

The object of the invention is a wall sandwich panel with photovoltaic panel for use in the construction industry. A photovoltaic panel wall sandwich panel comprises a metal shaped outer cladding 1, a metal shaped inner cladding 2 and an insulation core 3 located between the cladding, and lateral joint structures 4. The shaped outer cladding 1 contains convex embossments 6 along the sides of the sandwich panel, between which the embossments 6 have at least one substantially flat surface 7. At least one embossing 61 of the outer cladding includes an outer tongue 8 of the connector structure 4, and at least one embossing 62 of the outer cladding includes an outer groove 9 of the joint structure 4 that has a shape conforming to the outer tongue 8 of the joint structure 4. The shaped outer cladding 1 comprises at least one concave embossing 12 parallel to the sides of the sandwich panel within each substantially flat surface 7. At least one photovoltaic panel 10 is fixed to a substantially flat surface 7 between the convex embossments 6 of the outer cladding 1, with the outer surface of the photovoltaic panel 10 facing the outer surface of the embossments 6 to form a single plane, and furthermore, power supply wiring 11 from the photovoltaic panel 10 is located in at least one concave embossment 12 located under the photovoltaic panel 10.

## Description

The subject of the invention is a wall sandwich panel with photovoltaic panel and an assembly of sandwich panels having applications in the construction industry. A wall sandwich panel with a photovoltaic panel is a prefabricated element applicable to the assembly of outer partitions of buildings, especially for the construction of hall pavilions, warehouses, commercial and catering facilities.

The international application No. WO2017158429 provides a photovoltaic building panel comprising a sheet of metal with a socket for a photovoltaic module, in which the surface of the photovoltaic module is fixed in the socket and the surface of the sheet is flat. This sheet metal shape provides better protection of the integrated photovoltaic modules and their respective adhesive bonds against environmental damage, mechanical stress, cracking, corrosion and structural damage, thus ensuring higher efficiency and a longer lifetime. The disadvantage of this solution is that the photovoltaic module connections must be routed under the building panel, so in order to connect the panel, the wires must pass through the building panel and be routed on the inside.

A solar collector panel system is known from the publication of the International Application No. WO2010143173A1. The composite insulation panel consists of a top sheet, a bottom sheet and an insulation foam body sandwiched between the top and bottom sheets. The photovoltaic module of the solar collector is fixed to the top sheet, for example, with clamps. The disadvantages of this solution are inferior performance against wind suction and pressure, mechanical strength of the panel, which means that the panels must be shorter. This also results in a smaller panel area that can be used for the photovoltaic module. Other disadvantages of this solution include lack of aesthetics, lack of modularity, wiring is located under the modules and are exposed to weather conditions to a much greater extent.

The Ru.064600 utility model, which discloses a wall sandwich panel, is also known. The solution consists in the fact that on one side of the panel, the outer cladding and/or the inner cladding under the inner recess or under the inner projection runs diagonally into the gap space, and then, after bending, runs diagonally in the opposite direction to the core of its panel, creating a longitudinal sealing edge cooperating with a gasket embedded in the slot. The disadvantage of this solution is that the panel rigidity is too low to ensure a sufficiently rigid structure for mounting the photovoltaic panels, and the need to run power supply wiring either around the panels or on the inside of the sandwich panel.

The object of the invention is to provide a wall sandwich panel with a photovoltaic panel, which has a modular structure, increased resistance to wind suction and pressure, and also solves the problem of leading power supply wiring to photovoltaic modules.

A wall sandwich panel with a photovoltaic panel, according to the invention, comprises a metal shaped outer cladding, a metal shaped inner cladding and an insulation core located between the claddings, and lateral joint structures, wherein at least one side of the sandwich panel comprises joint structures comprising longitudinal grooves and tongues, and also sealing elements, with the ends of the outer facing and inner cladding forming the joint structures directed towards the longitudinal axis of the panel. A wall sandwich panel with a photovoltaic panel is characterized in that the shaped outer cladding comprises raised embossing along the sides of the sandwich panel, between which embossing there is at least one substantially flat surface. At least one of the convex embossments of the outer cladding includes an outer tongue of the joint structure, and at least one embossment of the outer cladding at the opposite side of the sandwich panel includes an outer groove of the joint structure, which in shape corresponds to the outer tongue of the joint structure. This ensures the possibility of connecting adjacent sandwich panels to form an assembly.

The shaped outer facing comprises at least one concave crease parallel to the sides of the sandwich panel within each substantially flat surface. At least one photovoltaic panel is fixed to a substantially flat surface between the convex ribs of the outer cladding, the outer surface of the photovoltaic panel flush with the outer surface of the ribs to form a single plane, and furthermore, the power wiring from the photovoltaic panel is located in at least one concave rib located under the photovoltaic panel.

Preferably, the inner cladding includes an internal tongue of the joint structure and, at the opposite side of the sandwich panel, the inner cladding includes an inner groove of the joint structure, which in shape corresponds to the inner tongue of the joint structure. The end edges of the outer cladding and inner cladding, which form the joint structures, face inward toward the longitudinal axis of the sandwich panel.

Preferably, a photovoltaic panel is fixed with screws.

Preferably, a photovoltaic panel is fixed with an adhesive.

Preferably, when the longitudinal convex embossments extend along the length of the panel and are convex relative to a substantially flat surface, the convex embossments have a trapezoidal cross-section with rounded corners.

Preferably, an insulation core contains a thermal insulation material.

Preferably, a thermal insulation material is one of the following: polyurethane foam, polyisocyanurate foam, phenolic foam (resol foam), foamed polystyrene, rock wool.

Preferably, the outer cladding is made of steel.

Preferably, the inner cladding is made of steel.

Preferably, there is one substantially flat surface between the two convex embossments, which contains one concave embossment parallel to the longer edges within each substantially flat surface.

Preferably, between the three convex embossments there are two substantially flat surfaces lying in a single plane, each containing one concave embossment parallel to the longer edges within each substantially flat surface.

Preferably, between the four convex embossments there are three substantially flat surfaces lying in one plane, each containing one concave embossment parallel to the longer edges within each substantially flat surface.

Preferably, the shaped inner cladding contains multiple shallow longitudinal embossments parallel to the longer edges of the sandwich panel.

An assembly of modular sandwich panels according to the invention includes at least one sandwich panel according to the invention and it is characterized in that at least one sandwich panel adjacent to another sandwich panel is connected to it by means of connecting structures, and this connection is sealed with sealing elements, and the outer surface of the connected sandwich panels forms one plane.

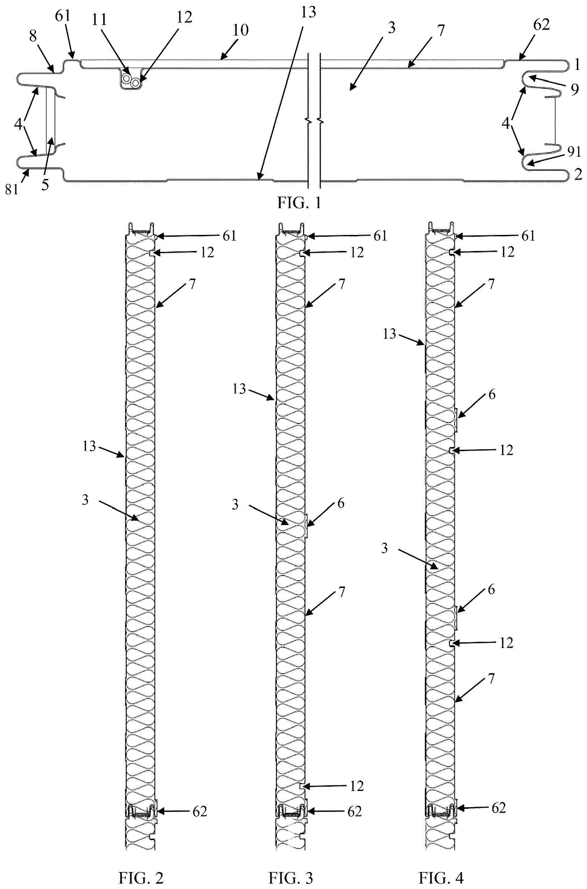

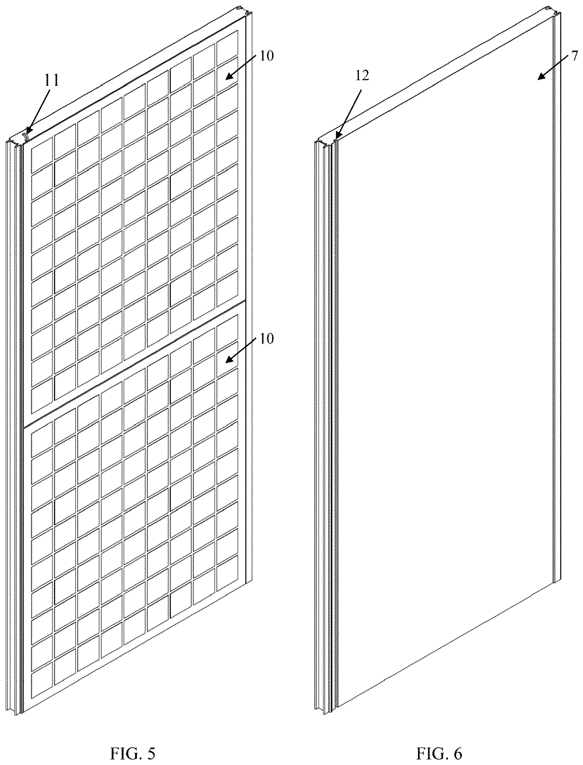

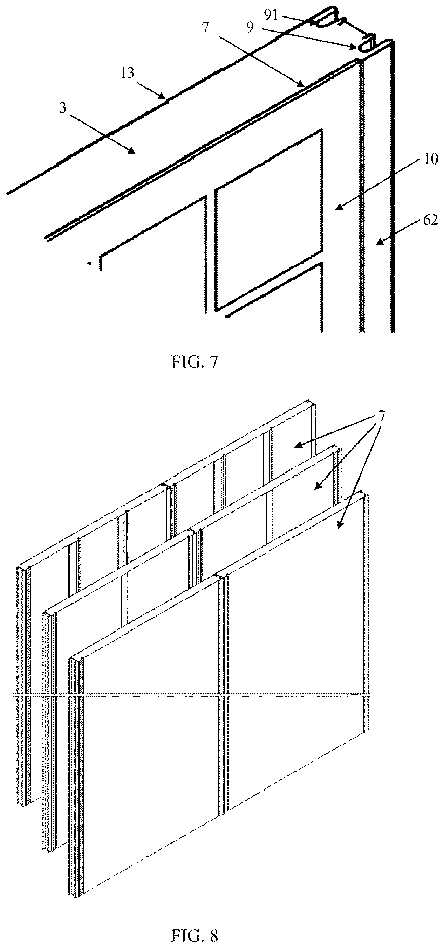

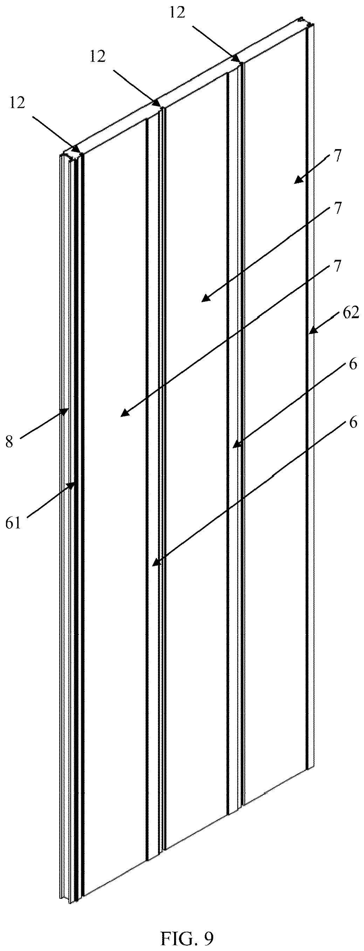

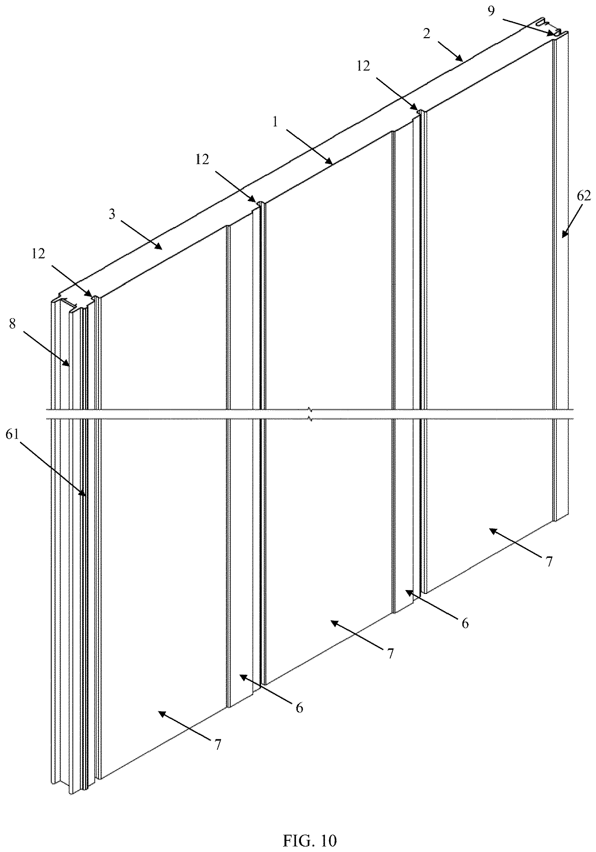

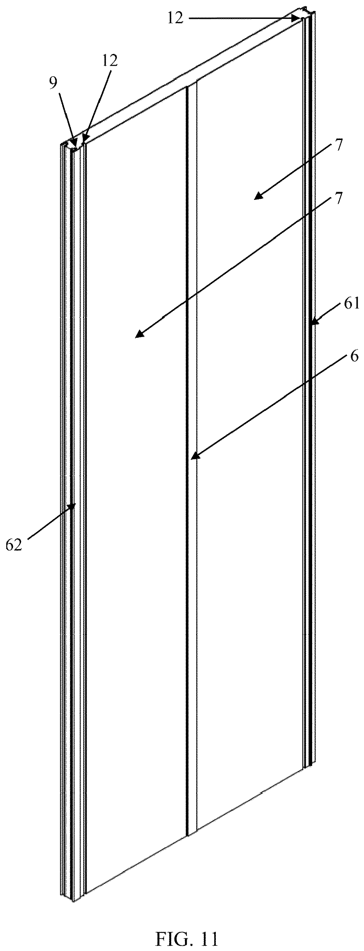

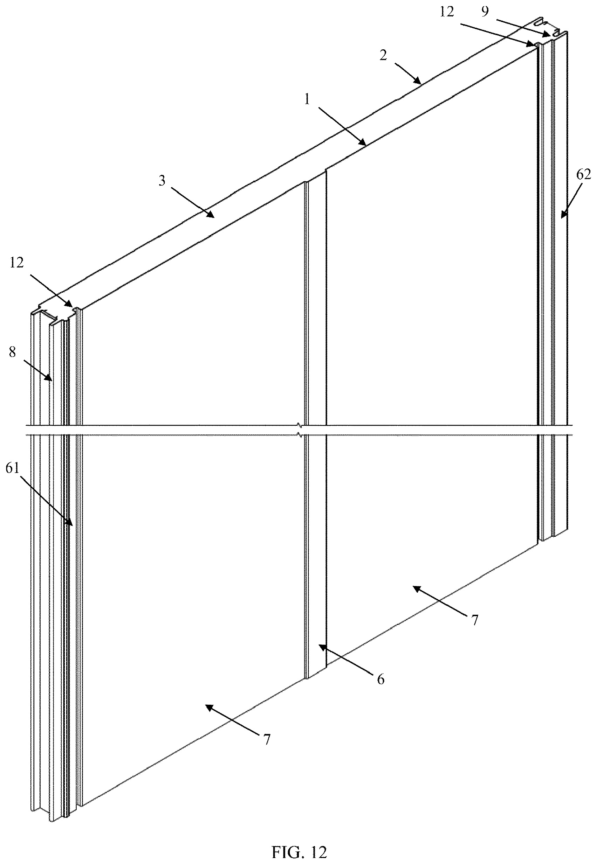

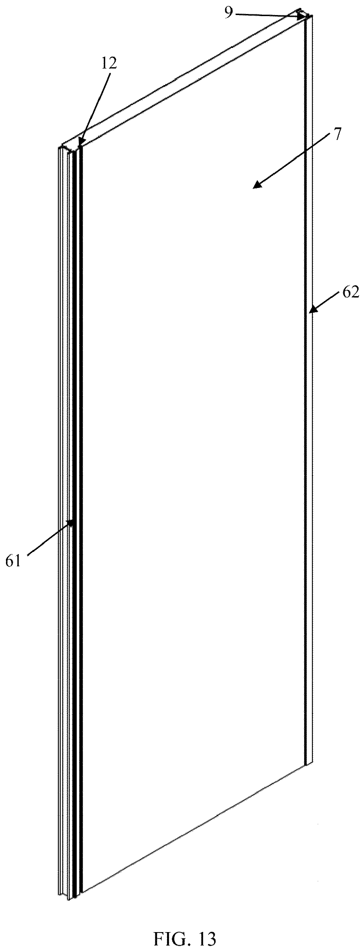

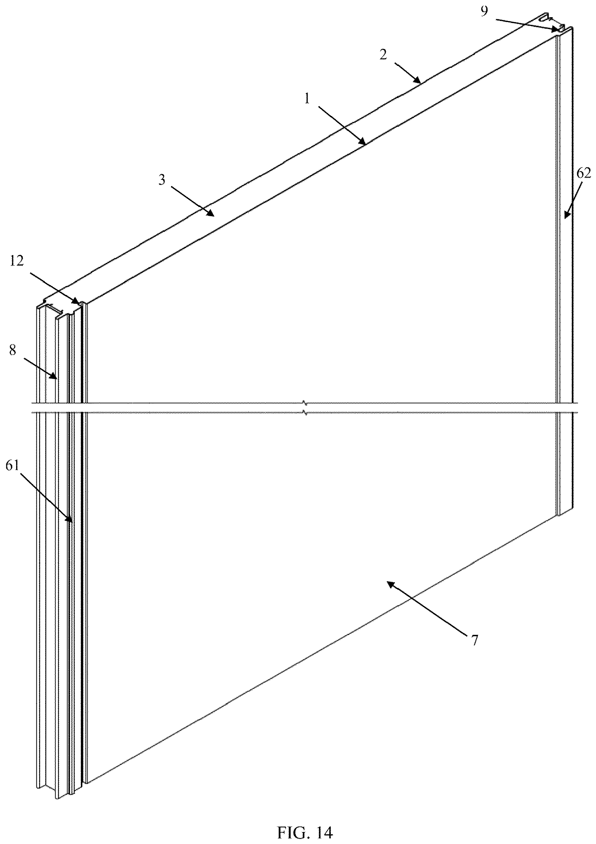

The object of the invention in the embodiment is visualized in the drawing, where Fig. 1 shows a cross section with a vertical break of a wall sandwich panel with a photovoltaic panel; Fig. 2 shows a cross-section of the sandwich panel in the embodiment with one essentially flat surface; Fig. 3 shows a cross-section of a sandwich panel in the embodiment with two essentially flat surfaces; Fig. 4 shows a cross-section of a sandwich panel in an embodiment with three essentially flat surfaces; Fig. 5 shows an axonometric view of a sandwich panel in an embodiment with one essentially flat surface to which photovoltaic panels are fixed; Fig. 6 shows an axonometric view of the sandwich panel of Fig. 5 without the photovoltaic panel; Fig. 7 shows the cutout of Fig. 5 showing the mutual position of the photovoltaic panel and the convex embossing; Fig. 8 shows a schematic comparison of various examples of the implementation of the sandwich panel; Fig. 9 shows an axonometric view of a sandwich panel in an embodiment with three essentially flat surfaces; Fig. 10 shows an axonometric view with a horizontal break of the sandwich panel in an embodiment with three essentially flat surfaces; Fig. 11 shows an axonometric view of a sandwich panel in an embodiment with two essentially flat surfaces; Fig. 12 shows an axonometric view with a horizontal break of a sandwich panel in an embodiment with two essentially flat surfaces; Fig. 13 shows an axonometric view of a sandwich panel in an embodiment with one essentially flat surface; Fig. 14 shows an axonometric view with a horizontal break of a sandwich panel in an embodiment with one essentially flat surface.

Wall sandwich panel with a photovoltaic panel (Fig. 1), in an embodiment, includes metal shaped outer cladding 1, metal shaped inner cladding 2 and an insulation core 3 located between the claddings, and lateral joint structures 4, also called latches. The sandwich panel has two sides that contain joint structures (latches). The sandwich panel has an elongated shape with a cuboid outline: it has an outer surface on which the photovoltaic panel is located, and an inner surface, longitudinal sides containing joint structures 4, and two end walls. The sandwich panel has a constant cross section, thus perpendicular to the longitudinal axis of the panel. The joint structures 4 contain longitudinal grooves and tongues, as well as sealing elements 5, with the end edges of the outer cladding 1 and inner cladding 2 forming the joint structures facing the longitudinal axis of the board and terminating inside the insulation core 3.

Furthermore, the shaped outer cladding 1 contains longitudinal convex embossments 6 parallel to the longer edges of the sandwich panel, between which the embossments 6 are one essentially flat surface 7 (Fig. 2, Fig. 13, Fig. 14). According to the aspect of the embodiment, when there are three convex embossments 6 parallel to the longer edges of the sandwich panel, there are two substantially flat surfaces 7 between them (Fig. 3, Fig. 11, Fig. 12). According to another aspect of the embodiment, when there are four convex embossments 6 parallel to the longer edges of the sandwich panel, there are three essentially flat surfaces 7 between them (Fig. 4, Fig. 9, Fig. 10). According to another aspect of the embodiment, when there are five convex embossments 6 parallel to the longer edges of the sandwich panel, there are four essentially flat surfaces 7 between them.

At least one of the convex embossments 6, embossment 61 of the outer cladding parallel to the edge includes the outer tongue 8 of the joint structure 4, and at least one of the convex embossments 6, embossment 62 of the outer cladding parallel to the opposite edge is adjacent to the outer groove 9 of the joint structure 4, the shape of which corresponds to the outer tongue 8 of the joint structure 4 (Fig. 1, Fig. 2, Fig. 3, Fig. 4).

The shaped outer cladding 1 contains at least one concave embossment 12 parallel to the longer edges within each substantially flat surface 7. In the embodiment, there is one concave embossment 12 (Fig. 2, Fig. 13, Fig. 14). Similarly, when there is more than one substantially flat surface 7 in aspects of the embodiment, there is one concave embossing 12 for each of them (Fig. 3, Fig. 11, Fig. 12, Fig. 4, Fig. 9, Fig. 10).

Shaped inner cladding 2 (Fig. 1) includes the inner tongue 81 of the joint structure 4, and at the opposite side of the sandwich panel, the inner cladding 2 includes the inner groove 91 of the joint structure 4, which shape corresponds to the inner tongue 81 of the joint structure 4. The end edges of the outer cladding 1 and inner cladding 2, which form joint structures 4, face inward toward the longitudinal axis of the sandwich panel.

A photovoltaic panel 10 is located in an essentially flat surface 7 (Fig. 1, Fig. 5). A photovoltaic panel is fixed to a substantially flat surface 7 using an adhesive. A photovoltaic panel in another aspect of the embodiment is fixed to a substantially flat surface 7 with screws. It is obvious to the expert that the panel can be fixed by other equivalent means.

The photovoltaic panel 10 is positioned between the convex embossments 6 of the outer cladding 1, with the outer surface of the photovoltaic panel 10 facing the outer surface of the embossments 6 to form a single plane (Fig. 7). An "outer surface" means that part of the embossments 6 which is visible after placing the photovoltaic panel 10. The embossments along the panel ensure its greater rigidity, and the mounting of the photovoltaic panel between the embossments increases its resistance to wind pressure and suction, mainly due to the elimination of voids under the panel. Regardless, an aesthetic effect is also achieved, which is that the photovoltaic panels form a single plane with the convex embossment 6.

The power supply wiring 11 from the photovoltaic panel 10 is located in the concave embossment 12 located under the photovoltaic panel 10 (Fig. 1, Fig. 5). It is understood that when there is more than one substantially flat surface 7 in the implementation aspects, a photovoltaic panel 10 is fixed to each of them, and power supply wiring 11 is located in the corresponding embossments 12 of the corresponding substantially flat surface 7.

A photovoltaic panel 10 extends along the entire wall panel. Along the entire wall sandwich panel within one essentially flat surface 7, in another aspect of the embodiment, several photovoltaic panels 10 are located, for example, two (Fig. 5). For practical reasons, it may be reasonable for the photovoltaic panel not to extend the entire length of the wall sandwich panel. In this case, the photovoltaic panel 10 extends along the wall sandwich panel except for sections of the wall sandwich panel, for example 100 cm long. The section without the photovoltaic panel 10 remains empty, but in terms of the embodiment it can be covered with a cover made of plastic or metal, forming one plane with the raised embossments and the photovoltaic panel 10. A photovoltaic panel 10 consists of many modules forming one panel, the panel can be fixed as a whole or by modules (Fig. 5).

The longitudinal raised embossments 6 have a substantially rectangular cross-section and extend along the length of the photovoltaic panel 10, and their outer surface forms a plane with the outer surface of the photovoltaic panel 10. The concave embossments 12 for the power supply wiring 11 has a U-shaped cross-section and their dimensions are adapted to the thickness of the power supply wiring of the photovoltaic panels 10.

The wall sandwich panel comprises an insulating core 3 which comprises a heat insulating material which may be made of one of the following: polyurethane foam, polyisocyanurate foam, phenolic foam (resole foam), expanded polystyrene, rock wool. For example, the thermal insulation material is made of resol foam.

The inner cladding 2 contains multiple shallow longitudinal embossments 13 parallel to the longer edges of the sandwich panel, which increase the rigidity of the inner cladding 2 (Fig. 1, Fig. 2, Fig. 3, Fig. 4).

The outer cladding 1 and inner cladding 2 are made of steel.

The wall sandwich panel according to the first aspect of the embodiment between the two convex embossments 6 comprises one substantially flat surface 7, which comprises one concave embossment 12 parallel to the longer edges within each substantially flat surface 7 (Fig. 2, Fig. 13, Fig. 14).

The wall sandwich panel according to the second aspect of the embodiment, between the three convex embossments 6, contains two essentially flat surfaces 7 lying in one plane, each of which contains one concave embossment 12 parallel to the longer edges within each essentially flat surface 7 (Fig. 3, Fig. 11, Fig. 12).

The wall sandwich panel according to the third aspect of the embodiment, between the four convex embossments 6 there are three essentially flat surfaces 7 lying in one plane, each of which contains one concave embossment 12 parallel to the longer edges within each essentially flat surface 7 (Fig. 4, Fig. 9, Fig. 10).

In the embodiment, a sandwich panel assembly includes at least one sandwich panel according to any of the previous embodiments. For example, two adjacent sandwich panels are connected to each other using joint structures 4, and this connection is sealed with sealing elements 5 (Fig. 2, Fig. 3, Fig. 4). A skilled person will appreciate that the panels put together form a building partition. The outer surface of the combined sandwich panels forms a single plane. In another aspect of the embodiment, the second panel may be a sandwich panel without a photovoltaic panel.

## Claims

1. A wall sandwich panel with a photovoltaic panel, comprises a metal shaped outer cladding (1), a metal shaped inner cladding (2) and an insulating core (3) located between the claddings, and lateral joint structures (4), with at least one side of the sandwich panel joint structures (4) containing longitudinal grooves and tongues, as well as sealing elements (5), where the ends of the outer cladding (1) and the inner cladding (2) forming the joint structures (4) are directed towards the longitudinal axis of the panel,
**characterized in that**
the shaped outer cladding (1) contains convex embossments (6) along the sides of the sandwich panel, between which the embossments (6) contain at least one substantially flat surface (7),
wherein at least one embossment (61) of the convex embossments (6) of the outer cladding (1) includes the outer tongue (8) of the joint structure (4), and at least one embossment (62) of the outer cladding at the opposite side of the sandwich panel includes the outer groove (9) of the joint structure (4), the shape of which corresponds to the outer tongue (8) of the joint structure (4),
the shaped outer cladding (1) includes at least one concave embossment (12) parallel to the sides of the sandwich panel within each substantially flat surface (7),
at least one photovoltaic panel (10) is fixed to a substantially flat surface (7) between the convex embossments (6) of the outer cladding (1), with the outer surface of the photovoltaic panel (10) facing the outer surface of the embossments (6) to form a single plane, and furthermore, the power supply wiring (11) from the photovoltaic panel (10) is located in at least one concave embossment (12) located under the photovoltaic panel (10).

2. A wall sandwich panel according to claim 1, **characterized in that** the inner cladding (2) includes an internal tongue (81) of the joint structure (4) and at the opposite side of the sandwich panel, the inner cladding (2) includes an inner groove (91) of the joint structure (4), which in shape corresponds to the inner tongue ( 81) of the joint structure (4), where the end edges of the outer cladding (1) and the inner cladding (2), forming the joint structures (4), are directed inwards towards the longitudinal axis of the sandwich panel.

3. A wall sandwich panel according to claim 1 or 2 **characterized in that** the photovoltaic panel
(10) is fixed with screws.

4. A wall sandwich panel according to claim 1 or 2 or 3 **characterized in that** the photovoltaic panel (10) is fixed with an adhesive.

5. A wall sandwich panel according to any of the preceding claims **characterized in that** the longitudinal convex embossments (6) extend along the length of the panel and are convex relative to a substantially flat surface (7), the convex embossments (6) having a trapezoidal cross-section with rounded corners.

6. A wall sandwich panel according to any of the preceding claims **characterized in that** the insulation core (3) contains a thermal insulating material.

7. A wall sandwich panel according to claim 6 **characterized in that** the thermal insulation material is one of the following: polyurethane foam, polyisocyanurate foam, phenolic foam (resol foam), foamed polystyrene, rock wool.

8. A wall sandwich panel according to any of the preceding claims **characterized in that** the outer cladding (1) is made of steel.

9. A wall sandwich panel according to any of the preceding claims **characterized in that** the inner cladding (2) is made of steel.

10. A wall sandwich panel according to any of the preceding claims **characterized in that** between two convex embossments (6) there is one substantially flat surface (7) which contains one concave embossment (12) parallel to the sides of the sandwich panel within each substantially flat surface (7).

11. A wall sandwich panel according to any of the claims 1-9, **characterized in that** between the three convex embossments (6) there are two substantially flat surfaces
(7) lying in a single plane, each of which contains one concave embossment (12) parallel to the sides of the sandwich panel within each essentially flat surface (7).

12. A wall sandwich panel according to any of the claims 1-9 **characterized in that** between the four convex embossments (6) there are three substantially flat surfaces (7) lying in one plane, each containing one concave embossment (12) parallel to the sides of the sandwich panel within each substantially flat surface (7).

13. Wall sandwich panel according to any of the preceding claims **characterized in that** the shaped inner cladding (2) includes a plurality of shallow longitudinal embossments (13) parallel to the sides of the sandwich panel.

14. A sandwich panel assembly that includes at least one sandwich panel as defined in claims 1-13 **characterized in that** at least one sandwich panel adjacent to another sandwich panel is joined thereto by joint structures (4), and this joint is sealed with sealing elements (5), and the outer surface of the joined sandwich panels forms a single plane.
